# EUROPEAN PATENT APPLICATION

(11) **EP 1 420 574 A1**
(43) Date of publication of application: **19.05.2004**
(21) Application number: 03256579.8
(22) Date of filing: 17.10.2003
(51) Int. Cl.: H04N 1/21

(54) **Cellular phone set with image sensing device and method of displaying remaining frame count or exposed frame count**

(30) Priority: 24.10.2002 JP 2002309517
(71) Applicant: KONICA MINOLTA HOLDINGS, INC., Tokyo 100-0005 (JP)
(72) Inventor: Yamaguchi, Susumu, Hachiojii-shi Tokyo (JP); Tansho, Kazuo, Hachiojii-shi Tokyo (JP); Atarashi, Yuuichi, Hachiojii-shi Tokyo (JP); Suzuki, Kazuhiko, Hachiojii-shi Tokyo (JP)
(74) Representative: Nicholls, Michael John

(57) **Abstract**

This invention relates to a cellular phone set with an image sensing device which includes an image sensing device which photographs an object to be photographed and a storage section which stores image data, and a method of displaying a remaining frame count or exposed frame count on a display section. This cellular phone set includes a calculation unit for calculating a remaining frame count or exposed frame count on the basis of data from the storage section, a display section, an input section which inputs an operation instruction to cause the display section to display a calculated remaining frame count or exposed frame count, and a display control unit for causing the display section to display the calculated remaining frame count or exposed frame count when the operation instruction is input.

## Description

### BACKGROUND OF THE INVENTION

### FIELD OF THE INVENTION:

The present invention relates to a cellular phone set with an image sensing device and, more particularly, to a cellular phone set with an image sensing device which can display a remaining frame count or exposed frame count.

### DESCRIPTION OF THE PRIOR ART:

Recently, image sensing devices such as digital cameras have been rapidly popularized with an improvement in performance and a reduction in cost. A digital camera converts an object image into an electrical signal by using an image sensing device such as a CCD (Charge Coupled Device), and can record the resultant image data on a storage medium such as a semiconductor memory or magnetic disk. For example, the digital camera can easily display a photographed image on the screen in photographing operation and delete the data of unnecessary photographed images.

In general, the digital camera has a data display section provided on the camera body to display information about photographing operation, such as a photographing mode, image quality mode, and remaining battery capacity. A digital camera designed to display a remaining frame count calculated from the remaining capacity of a storage medium is disclosed (see, for example, Japanese Unexamined Patent Publication No. 2001-69442). The user can perform photograph operation while checking the remaining frame count. This can prevent the user from missing a photography chance due to a storage capacity shortage.

With reductions in the size and weight of digital cameras, they have tended to be combined with the functions of other electronic devices. For example, cellular phone sets with image sensing devices have been proposed, which are communication terminals such as cellular phones and PHSs (Personal Handyphone Systems) (to be generally referred to as "cellular phone sets" hereafter) incorporating digital cameras.

Various kinds of information are displayed on the display section of a cellular phone set with an image sensing device. If, therefore, a remaining frame count is additionally displayed on the display section, an increasing amount of information displayed on the display section may make it difficult to see. Since photographed images are displayed on the display section in the camera mode, in particular, many pieces of information are superimposed on the photographed images, interfering with display of the images.

### SUMMARY OF THE INVENTION

The present invention has been made in consideration of the above situation in the prior art, and has as its first object to provide a cellular phone set with an image sensing device which can display a remaining frame count or exposed frame count in accordance with a user's request.

It is the second object of the present invention to provide a method of displaying a remaining frame count or exposed frame count on a display section of a cellular phone set with an image sensing device.

In order to achieve the first object, according to the first aspect of the present invention, there is provided a cellular phone set with an image sensing device, which includes an image sensing device which photographs an object to be photographed and a storage section which stores photographed image data, comprising a calculation unit for calculating a remaining frame count or exposed frame count on the basis of data from the storage section, a display section, an input section which inputs an operation instruction to cause the display section to display a calculated remaining frame count or exposed frame count, and a display control unit for causing the display section to display the calculated remaining frame count or exposed frame count when the operation instruction is input.

According to the second aspect of the present invention, the data from the storage section described in the first aspect is a remaining capacity of the storage section, and a remaining frame count is calculated by the calculation unit on the basis of the remaining capacity.

According to the third aspect of the present invention, the data from the storage section described in the first aspect is image data stored in the storage section, and an exposed frame count is calculated by the calculation unit on the basis of the image data.

According to the fourth aspect of the present invention, there is provided a cellular phone set with an image sensing device, which includes an image sensing device which photographs an object to be photographed and a storage section which stores photographed image data, comprising a calculation unit for calculating a remaining frame count or exposed frame count on the basis of data from the storage section, a display section, a mode switch which sets an operation mode of the cellular phone set with the image sensing device to a mode of causing the image sensing device to operate, and a display control unit for causing the display section to display the calculated remaining frame count or exposed frame count when the mode of causing the image sensing device to operate is set.

According to the fifth aspect of the present invention, the data from the storage section described in the fourth aspect is a remaining capacity of the storage section, and a remaining frame count is calculated by the calculation unit on the basis of the remaining capacity.

According to the sixth aspect of the present invention, the data from the storage section described in the fourth aspect is image data stored in the storage section, and an exposed frame count is calculated by the calculation unit on the basis of the image data.

In order to achieve the second object, according to the seventh aspect of the present invention, there is provided a method of displaying a remaining frame count or exposed frame count in a cellular phone set with an image sensing device, which includes an image sensing device which photographs an object to be photographed and a storage section which stores photographed image data, comprising the steps of detecting data from the storage section, calculating a remaining frame count or exposed frame count in a camera mode on the basis of the data, discriminating whether or not the camera mode is set, discriminating, when the camera mode is set, whether or not a frame count display switch for display of the remaining frame count or exposed frame count is pressed, and causing the display section to display a remaining frame count or exposed frame count, when the frame count display switch is pressed.

As is obvious from the respective aspects, according to the present invention, when a predetermined operation instruction is input, a remaining frame count or exposed frame count can be displayed on the display section. The user can therefore perform photographing operation while checking a remaining frame count or exposed frame count in accordance with his/her request. This prevents the user from missing a good photography chance. When the above operation instruction is not input, no remaining frame count or exposed frame count is displayed on the display section. That is, when the user does not want to display a remaining frame count, no space is occupied for it on the display section.

By knowing a total exposed frame count, the user can predict a remaining frame count.

In addition, when the mode of making the image sensing device operate is set, i.e., the camera mode is set, an exposed frame count can be displayed on the display section. This allows the user to perform photographing operation while checking the exposed frame count.

The above and many other objects, features and advantages of the present invention will become manifest to those skilled in the art upon making reference to the following detailed description and accompanying drawings in which preferred embodiments incorporating the principle of the invention are shown by way of illustrative examples.

### BRIEF DESCRIPTION OF THE DRAWINGS

Figs. 1A and 1B are a display-section-side front view and photographing-section-side rear view of a cellular phone set according to the present invention, respectively;
Fig. 2 is a block diagram showing the functional arrangement of the cellular phone set shown in Figs. 1A and 1B;
Fig. 3 is a flow chart showing the first processing example executed by a CPU incorporated in a cellular phone set according to the first embodiment of the present invention;
Fig. 4 is a view showing an example of the display form of a remaining frame count in the embodiments of the present invention;
Fig. 5 is a flow chart showing the second processing example executed by a CPU incorporated in a cellular phone set according to the second embodiment of the present invention; and
Fig. 6 is a flow chart showing the third processing example executed by a CPU incorporated in a cellular phone set according to the third embodiment of the present invention.

### DETAILED DESCRIPTION OF THE PREFERRED EMBODIMENTS

A few preferred embodiments of the present invention will be described in detail below with reference to the accompanying drawings. Obviously, however, the scope of the present invention is not limited to the embodiments shown in the drawings.

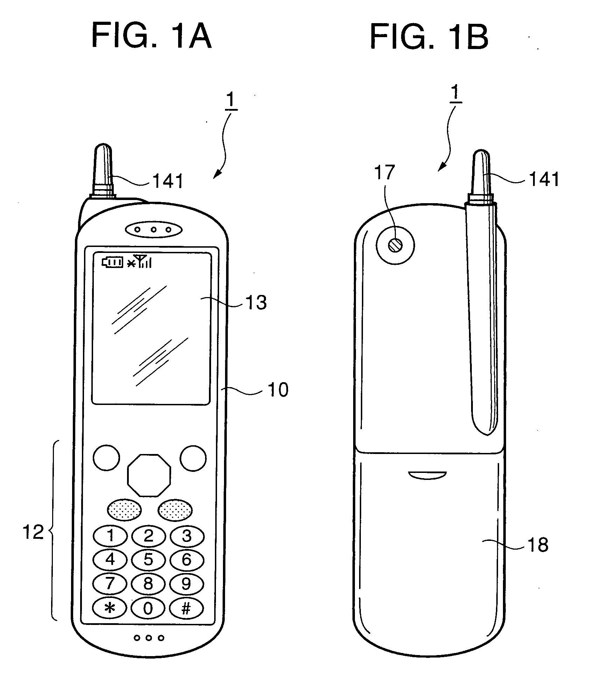

Figs. 1A and 1B show the outer arrangement of a cellular phone set with an image sensing device (to be briefly referred to as the "cellular phone set 1" hereinafter) according to the present invention. As shown in Figs. 1A and 1B, the cellular phone set 1 includes a housing 10, input section 12, display section 13, photographing section 17, power supply section 18, and antenna 141.

As shown in Fig. 1A which is a display-section-side front view, the input section 12 and display section 13 are arranged, on the front surface of the cellular phone set 1. As shown in Fig. 1B which is a photographing-section-side rear view, the photographing section 17 is provided on the rear surface of the cellular phone set 1. The power supply section 18 such as a rechargeable pack is detachably mounted in the rear surface of the housing 10. The antenna 141 is provided on an upper portion of the cellular phone set 1 and withdrawably retracted in a substantially cylindrical antenna hole (not shown) formed in the housing 10.

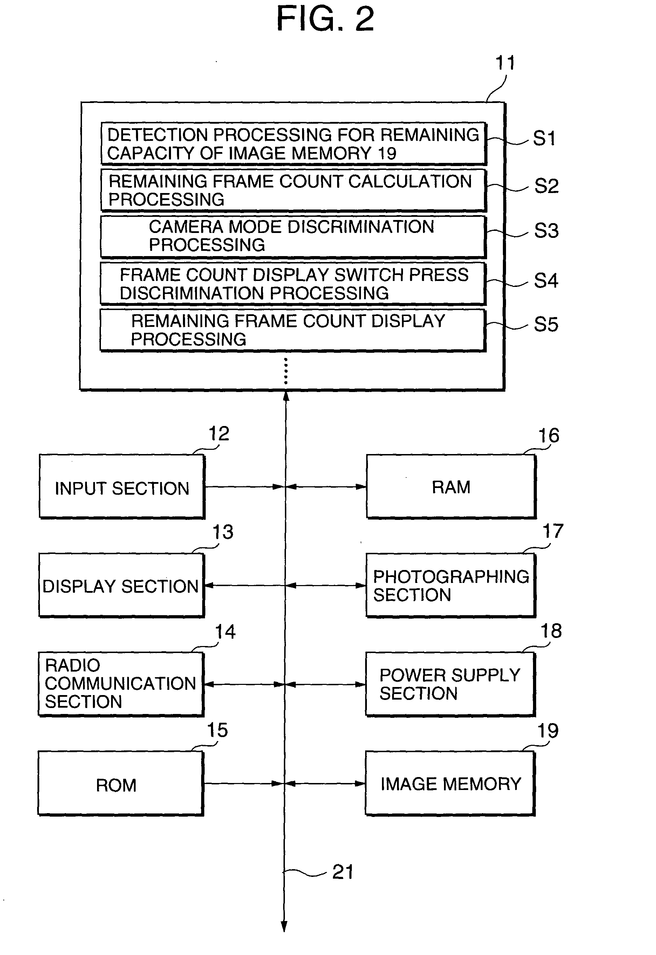

Fig. 2 shows the functional arrangement of the cellular phone set 1 in Fig. 1. As shown in Fig. 2, the cellular phone set 1 includes a CPU (Central Processing Unit) 11, the input section 12, the display section 13, a radio communication section 14, a ROM (Read Only Memory) 15, a RAM (Random Access Memory) 16, the photographing section 17, the power supply section 18, an image memory 19, and the like. The respective sections are connected to each other trough a bus 21.

The CPU 11 loads designated ones of various kinds of programs for the cellular phone set 1, which are recorded on the ROM 15, into the work area of the RAM 16, in accordance with various kinds of instructions input from the input section 12 or data input from the radio communication section 14. The CPU 11 executes various kinds of processes in cooperation with the above programs. The CPU 11 then stores the processing results in a predetermined area in the RAM 16 and causes the display section 13 to display them.

The input section 12 includes a ten-key pad, various functional switches, a mode switch for switching the communication mode and camera mode, a release switch used when an image is to be photographed, and the like, and outputs press signals generated by various kinds of key operations to the CPU 11.

The display section 13 is constituted by an LCD (Liquid Crystal Display) panel and the like, and displays on the screen on the basis of display data input from the CPU 11. The display section 13 displays image data, as a preview, captured from the image sensing device of the photographing section 17 at the time of photographing operation, and displays photographed image data.

The radio communication section 14 includes the antenna 141 for transmission/reception of radio signals associated with termination/origination and the like to/from a radio base station (not shown). The radio communication section 14 executes a cellular phone communication protocol corresponding to a communication scheme (e.g., W-CDMA or cdma2000) conforming to IMT-2000 (International Mobile Telecommunications-2000) between the cellular phone set and the radio base station in accordance with an instruction input from the CPU 11. The radio communication section 14 then executes transmission/reception of transmission/reception voice and data communication through a communication channel set in this communication scheme.

The ROM 15 is formed from a.nonvolatile semiconductor memory. The ROM 15 stores, for example, various kinds of application programs and communication processing programs for cellular phone sets which are executed by the CPU 11.

The RAM 16 is formed from a rewritable semiconductor device. The RAM 16 is a storage medium in which data is temporarily stored. The RAM 16 has a program area in which programs to be executed by the CPU 11 are loaded, a data area in which data input from the input section 12 and radio communication section 14, various kinds of processing results obtained by the CPU 11, and the like are stored, and the like.

The photographing section 17 is constituted by an optical lens formed from glass or a plastic material and an image sensing device such as a CCD (Charge Coupled Device) or CMOS (Complementary Metal Oxide Semiconductor). The photographing section 17 converts an image input through the optical lens into an electrical signal through the image sensing device and generates image data.

The power supply section 18 is constituted by, for example, a secondary battery such as a lithium battery, nickel battery, or NiCad battery. When the power switch is turned on, the power supply section 18 supplies, from the positive and negative terminals, power of a predetermined voltage to a driving circuit for driving each section of the cellular phone set 1, under the control of the CPU 11.

As the image memory 19, a magnetic disk, semiconductor memory, or the like is used. The image memory 19 stores image data photographed by the photographing section 17.

A few preferred operational embodiments of the cellular phone set 1 of the present invention will be described next.

The following should be understood as a premise for the description of operation. Programs for implementing the respective processes written in the flow charts are stored in the ROM 15 in the form of program codes that can be read by the CPU 11 of the cellular phone set 1, and the CPU 11 sequentially executes operations based on the program codes.

### First Embodiment:

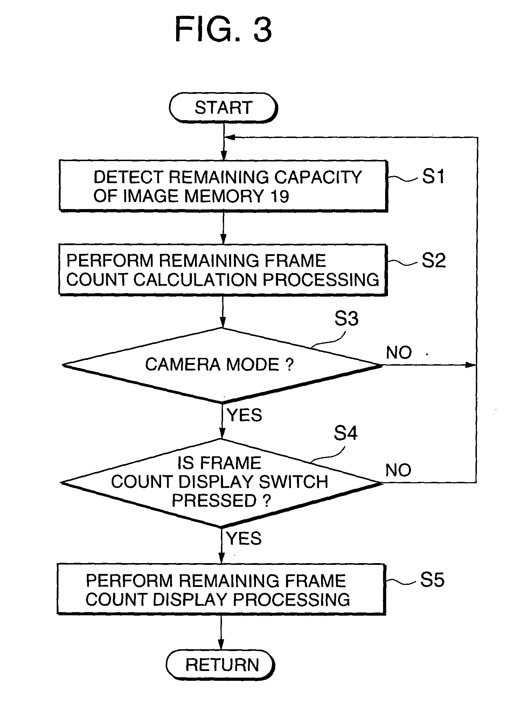

Fig. 3 is a flow chart showing the first processing example executed by a CPU 11 according to the first embodiment of the present invention.

As shown in Fig. 3, the CPU 11 detects the remaining capacity of an image memory 19 (step S1), and calculates a remaining frame count in the camera mode on the basis of the remaining capacity of the image memory 19 (step S2). The CPU 11 checks whether or not the camera mode is set by a mode switch of an input section 12 (step S3). If the camera mode is set (YES in step S3), the CPU 11 checks whether or not a frame count display switch for display of a remaining frame count, which is provided for the input section 12, is pressed (step S4) . If the frame count display switch is pressed (YES in step S4), the remaining frame count stored in the RAM 16 is displayed on a display section 13 (step S5).

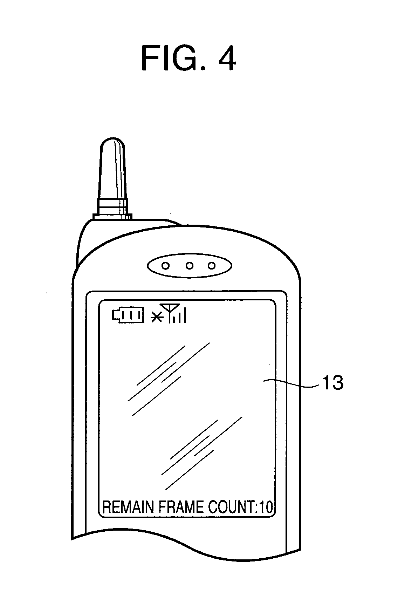

Fig. 4 shows an example of the display form of a remaining frame count. Fig. 4 shows a case wherein the remaining frame count is 10.

According to a cellular phone set 1 of the first embodiment, therefore, when the frame count display switch is pressed, the remaining frame count calculated on the basis of the remaining capacity of the image memory 19 can be displayed on the display section 13. This allows the user to press the frame count display switch when he/she wants to display a remaining frame count and to perform photographing operation while checking the remaining frame count. This makes it possible to prevent the user from missing a photography chance due to a shortage in the capacity of the image memory 19. When the frame count display switch is not pressed, no remaining frame count is displayed on the display section 13. When, therefore, the user does not want to display a remaining frame count, no space is occupied for a remaining frame count on the display section 13.

### Second Embodiment:

The second embodiment of the present invention will be described next with reference to Figs. 1, 2, and 5. The second embodiment is the same as the first embodiment in terms of the outer appearance of the cellular phone set 1 shown in Fig. 1 and the functional arrangement of the cellular phone set 1 shown in Fig. 2, and hence a description thereof will be omitted.

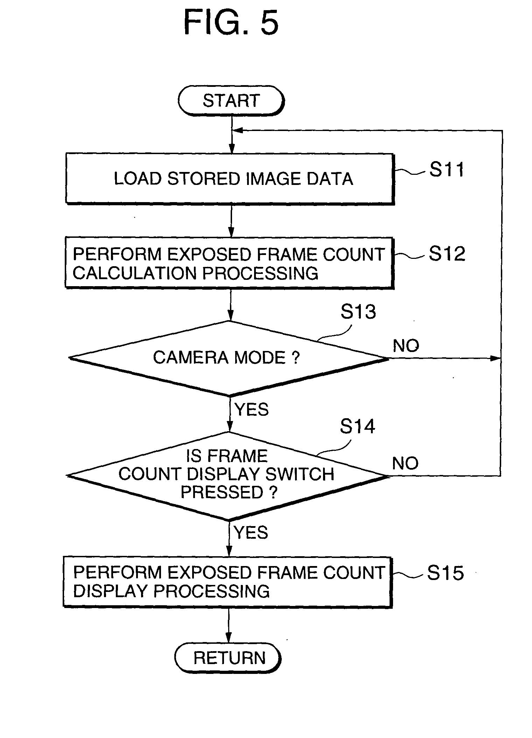

Fig. 5 is a flow chart showing the second processing example executed by a CPU 11 according to the second embodiment of the present invention.

In the first embodiment, when the frame count display switch for display of a remaining frame count, which is provided for the input section 12, is pressed after the camera mode is set, a remaining frame count is displayed on the display section 13. In the second embodiment, when a frame count display switch for display of an exposed frame count, which is provided for an input section 12, is pressed, an exposed frame count is displayed.

As shown in Fig. 5, the CPU 11 loads image data stored in an image memory 19 (step S11), and calculates an exposed frame count in the camera mode on the basis of the image data (step S12). The calculated exposed frame count is stored in a RAM 16. The CPU 11 then checks whether or not the camera mode is set by a mode switch of the input section 12 (YES in step S13). If the camera mode is set (YES in step S13), the CPU 11 checks whether or not the frame count display switch for display of an exposed frame count, which is provided for the input section 12, is pressed (step S14). When the frame count display switch is pressed (YES in step S14), the exposed frame count stored in the RAM 16 is displayed on a display section 13 (step S15) .

According to a cellular phone set 1 of the second embodiment, therefore, when the frame count display switch is pressed, the exposed frame count calculated on the basis of the remaining capacity of the image memory 19 can be displayed on the display section 13. This allows the user to press the frame count display switch when he/she wants to display a remaining frame count and to perform photographing operation while checking the exposed frame count. If the user knows the total remaining frame count in advance, he/she can predict a remaining frame count. This makes it possible to prevent the user from missing a photography chance due to a shortage in the capacity of the image memory 19. When the frame count display switch is not pressed, no remaining frame count is displayed on the display section 13. When, therefore, the user does not want to display a remaining frame count, no space is occupied for a remaining frame count on the display section 13.

### Third Embodiment:

The third embodiment of the present invention will be described next with reference to Figs. 1, 2, and 6. The third embodiment is the same as the first embodiment in terms of the outer appearance of the cellular phone set 1 shown in Fig. 1 and the functional arrangement of the cellular phone set 1 shown in Fig. 2, and hence a description thereof will be omitted.

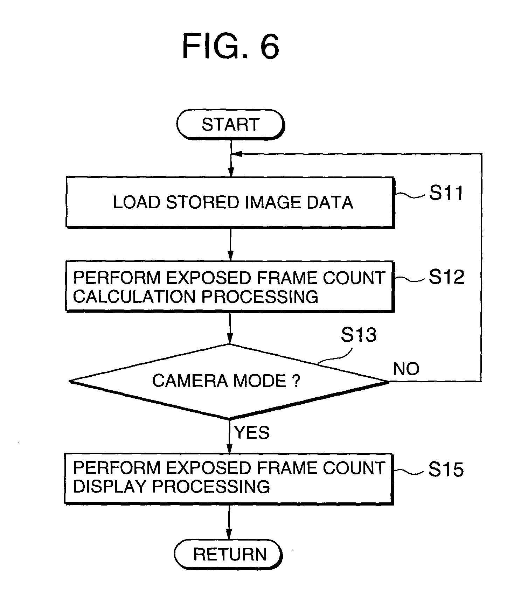

Fig. 6 is a flow chart showing the third processing example executed by a CPU 11 according to the third embodiment of the present invention.

In the second embodiment, when the frame count display switch for display of an exposed frame count, which is provided for the input section 12, is pressed after the camera mode is set, an exposed frame count is displayed. In the third embodiment, when the cameral mode is set, an exposed frame count is displayed on a display section 13. The same reference numerals as in the second embodiment denote the same parts in the third embodiment, and a description thereof will be omitted.

As shown in Fig. 6, the CPU 11 checks whether the camera mode is set by a mode switch of an input section 12 (step S13). If the camera mode is set (YES in step S13), an exposed frame count is displayed on the display section 13 (step S15).

According to a cellular phone set 1 of the third embodiment, therefore, when the camera mode for making a photographing section 17 operate is set, the exposed frame count calculated on the basis of the remaining capacity of an image memory 19 can be displayed on the display section 13. This allows the user to perform photographing operation while checking the exposed frame count. If the user knows the total remaining frame count in advance, he/she can predict a remaining frame count. This makes it possible to prevent the user from missing a photography chance due to a shortage in the capacity of the image memory 19. When the camera mode is not set, no exposed frame count is displayed on the display section 13. Therefore, no space is occupied for an exposed frame count on the display section 13.

Note that the description of each of the above embodiments concerns a preferred example of the cellular phone set 1 of the present invention, and the present invention is not limited to this.

For example, the first embodiment is configured to display a remaining frame count when the frame count display switch is pressed. However, the present invention is not limited to this. For example, when a predetermined key of the input section 12 is pressed, a remaining frame count or exposed frame count may be displayed.

Alternatively, in each embodiment described above, frame count display processing may be executed in accordance with the setting made by the user. This makes it possible to display a remaining frame count or exposed frame count when the user determines it to be preferable, and vice versa. Therefore, a remaining frame count or exposed frame count can be displayed in accordance with the application purpose intended by the user, thus providing the cellular phone set 1 with high convenience.

The detailed arrangement and detailed operation of the cellular phone set 1 according to each of the above embodiments can be properly changed within the spirit and scope of the invention.

## Claims

1. A cellular phone set with an image sensing device, which includes an image sensing device which photographs an object to be photographed and a storage section which stores photographed image data, comprising:
calculation means for calculating a remaining frame count or exposed frame count on the basis of data from the storage section;
a display section;
an input section which inputs an operation instruction to cause said display section to display a calculated remaining frame count or exposed frame count; and
display control means for causing said display section to display the calculated remaining frame count or exposed frame count when the operation instruction is input.

2. A phone set according to claim 1, wherein the data from the storage section is a remaining capacity of the storage section, and a remaining frame count is calculated by said calculation means on the basis of the remaining capacity.

3. A phone set according to claim 1, wherein the data from the storage section is image data stored in the storage section, and an exposed frame count is calculated by said calculation means on the basis of the image data.

4. A cellular phone set with an image sensing device, which includes an image sensing device which photographs an object to be photographed and a storage section which stores photographed image data, comprising:
calculation means for calculating a remaining frame count or exposed frame count on the basis of data from the storage section;
a display section;
a mode switch which sets an operation mode of said cellular phone set with the image sensing device to a mode of causing the image sensing device to operate; and
display control means for causing said display section to display the calculated remaining frame count or exposed frame count when the mode of causing the image sensing device to operate is set.

5. A phone set according to claim 4, wherein the data from the storage section is a remaining capacity of the storage section, and a remaining frame count is calculated by said calculation means on the basis of the remaining capacity.

6. A phone set according to claim 4, wherein the data from the storage section is image data stored in the storage section, and an exposed frame count is calculated by said calculation means on the basis of the image data.

7. A method of displaying a remaining frame count or exposed frame count in a cellular phone set with an image sensing device, which includes an image sensing device which photographs an object to be photographed and a storage section which stores photographed image data, comprising the steps of:
detecting data from the storage section;
calculating a remaining frame count or exposed frame count in a camera mode on the basis of the data;
discriminating whether or not the camera mode is set;
discriminating, when the camera mode is set, whether or not a frame count display switch for display of the remaining frame count or exposed frame count is pressed; and
causing the display section to display a remaining frame count or exposed frame count, when the frame count display switch is pressed.

8. A method according to claim 7, wherein the data from the storage section is a remaining capacity of the storage section, and a remaining frame count is calculated on the basis of the remaining capacity.

9. A method according to claim 7, wherein the data from the storage section is image data stored in the storage section, and an exposed frame count is calculated on the basis of the image data.
